# FASCICULE DE BREVET EUROPEEN

(11) **EP 3 194 744 B1**
(45) Date de publication et mention de la délivrance du brevet: **26.08.2020**
(21) Numéro de dépôt: 15718559.6
(22) Date de dépôt: 09.04.2015
(51) Int. Cl.: F02B 37/14, B60W 10/04, F01N 3/023, F02D 41/02, F02D 41/00, F02B 39/10, F02B 37/18, F02B 37/24, F02B 37/10, F02D 41/14, F02B 33/40, F02B 37/04, B60K 6/24, B60K 6/48, B60K 6/485, B60W 10/06, B60W 20/00, B60W 20/16, F02D 41/06

(54) **PROCÉDÉ DE PILOTAGE D'UN GROUPE MOTOPROPULSEUR EQUIPÉ D'UN COMPRESSEUR ÉLECTRIQUE**
VERFAHREN ZUR STEUERUNG EINES ANTRIEBSSTRANGS AUSGERÜSTET MIT EINEM ELEKTRISCHEN VERDICHTER
METHOD TO CONTROL A POWERTRAIN EQUIPPED WITH AN ELECTRICAL COMPRESSOR

(30) Priorité: 15.09.2014 FR 1458675
(43) Date de publication de la demande: 26.07.2017
(73) Titulaire: Renault s.a.s., 92100 Boulogne-Billancourt (FR)
(72) Inventeur: TALON, Vincent, 69007 Lyon (FR); BORDET, Nicolas, 18100 Vierzon (FR)
(86) Numéro de dépôt international: PCT/FR2015/050958
(87) Numéro de publication internationale: WO 2016/042217

(56) Documents cités:
- EP-A1- 0 352 064
- EP-A1- 2 463 497
- DE-A1-102005 040 887
- DE-A1-102006 000 075
- FR-A1- 2 855 215
- US-A1- 2002 083 700
- US-A1- 2011 107 739
- US-B1- 7 076 954

## Description

La présente invention concerne de manière générale le traitement des émissions polluantes des moteurs thermiques (également appelés « moteurs à combustion interne »).

Elle concerne plus particulièrement un procédé de pilotage d' un groupe motopropulseur pour véhicule automobile, comportant :
- un moteur thermique qui comprend :
   - un bloc moteur qui délimite des cylindres et qui est équipé d'un vilebrequin,
   - une ligne d'admission d'air frais dans les cylindres,
   - une ligne d'échappement de gaz brûlés hors des cylindres, qui comprend un moyen de traitement des gaz brûlés,
   - un turbocompresseur qui comprend une turbine montée dans la ligne d'échappement, un compresseur principal monté dans la ligne d'admission, et des moyens de délestage de ladite turbine,
- une machine électrique réversible qui est couplée au vilebrequin du moteur thermique et qui est connectée à une batterie d'accumulateurs.

Elle concerne également un procédé de pilotage d'un tel groupe motopropulseur.

### ARRIÈRE-PLAN TECHNOLOGIQUE

On recherche actuellement, dans un cadre législatif toujours plus contraignant et dans un souci de préservation de l'environnement, des solutions techniques permettant d'améliorer le fonctionnement des moteurs thermiques, notamment pour réduire le taux d'éléments polluants contenus dans les gaz brûlés émis par ces moteurs dans l'atmosphère.

Pour réduire ces émissions polluantes, un moteur thermique comporte généralement dans sa ligne d'échappement des moyens de traitement des gaz brûlés. Il s'agit généralement d'un catalyseur et/ou d'un piège à oxydes d'azote et/ou d'un filtre à particules.

Un catalyseur ou un piège à oxydes d'azote fonctionne de manière optimale sur une plage de températures donnée (généralement comprise entre 150 et 250 degrés Celsius). Il présente en revanche des performances fortement réduites à température ambiante, juste après le démarrage du moteur. En conséquence, la majeure partie des polluants rejetés dans l'atmosphère est émise dans les minutes qui suivent la phase de démarrage à froid du moteur.

Une solution pour améliorer l'efficacité de ce catalyseur ou piège à oxydes d'azote consisterait alors à le dimensionner en fonction de son rendement à basses températures, en augmentant sa taille. Néanmoins, étant donné le prix élevé des matériaux précieux utilisés pour fabriquer un tel élément, il est difficile de limiter le phénomène de rejets polluants par ce biais.

Par ailleurs, un piège à oxydes d'azote ou un filtre à particules est conçu pour se charger progressivement d'oxydes d'azote ou de particules fines.

L'accumulation d'oxydes d'azote réduit l'efficacité du piège et l'accumulation de particules fines entrave progressivement l'évacuation des gaz brûlés.

Il est alors connu de régénérer ces éléments en injectant du carburant dans la ligne d'échappement pour réduire les oxydes d'azote et pour augmenter la température des gaz brûlés, ce qui a pour effet de brûler les particules fines.

Cette régénération est généralement mise en œuvre en injectant, à chaque cycle du moteur, un surplus de carburant dans les cylindres, de manière à accroître le taux d'hydrocarbures imbrûlés contenus dans les gaz brûlés. Ce carburant peut ainsi venir réagir avec les oxydes d'azote retenus dans le piège. Cette réaction chimique est très exothermique, si bien que les gaz brûlés sortent du piège à une température très élevée, de l'ordre de 650°C, et entrent dans le filtre à particules en brûlant les particules fines qui encombrent ce dernier.

L'inconvénient de ce procédé est qu'il génère une surconsommation de carburant qui s'avère onéreuse.

On connait alors du document FR2816664 un groupe motopropulseur qui est couplé à une machine électrique réversible pouvant fonctionner en mode « moteur » ou en mode « génératrice ». En mode « génératrice », la machine électrique est un alternateur qui fournit un courant électrique destiné à être stocké dans une batterie d'accumulateurs ; en mode « moteur », elle est au contraire alimentée par le courant stocké dans la batterie d'accumulateurs et elle fournit un couple supplémentaire au groupe motopropulseur.

Le procédé décrit dans ce document est le suivant.

Pendant la régénération, le couple délivré par le moteur thermique est fixé à une valeur déterminée de manière à permettre aux gaz brûlés d'atteindre une température assurant une régénération optimale. Si ce couple est supérieur au couple nécessaire pour entraîner le véhicule à la vitesse souhaitée, la machine électrique réversible est placée en mode génératrice, ce qui permet de recharger la batterie. Dans le cas contraire, la machine électrique réversible est placée en mode moteur, de manière que les roues motrices reçoivent bien le couple souhaité.

Cette méthode n'est pas complètement satisfaisante pour les deux raisons suivantes.

La première raison est que si la batterie est complètement chargée, la machine électrique ne peut être placée en mode génératrice, si bien qu'il n'est pas possible pour le moteur thermique de délivrer un couple supérieur au couple nécessaire pour entraîner le véhicule à la vitesse souhaitée.

La seconde raison est que pour augmenter le couple délivré par le moteur thermique, on utilise le turbocompresseur afin d'augmenter la pression de l'air admis dans les cylindres. Pour faire fonctionner ce turbocompresseur, il est alors nécessaire d'utiliser la turbine et, par conséquent, de détendre les gaz brûlés. Cette détente a pour effet de réduire la température des gaz brûlés, ce qui va à l'encontre de l'augmentation de température recherchée.

On connaît également du document FR2855215 un moteur pour véhicule automobile, comportant un bloc moteur, une ligne d'admission d'air frais, une ligne d'échappement de gaz brûlés et un turbocompresseur. La ligne d'échappement est équipée de moyens de traitement des gaz brûlés. La ligne d'admission est quant à elle équipée, en amont du turbocompresseur, d'un compresseur auxiliaire actionné par un moteur électrique.

### OBJET DE L'INVENTION

Afin de remédier aux inconvénients précités de l'état de la technique, la présente invention propose un procédé de pilotage d' un groupe motopropulseur tel que défini dans l'introduction, dans lequel le moteur thermique comprend également un compresseur électrique qui est monté dans la ligne d'admission et qui est actionné par un moteur électrique connecté à ladite batterie d'accumulateurs.

Elle propose également ce procédé de pilotage de ce groupe motopropulseur dans lequel on acquiert un couple d'entraînement nécessaire pour entraîner le véhicule automobile ainsi que la température des gaz brûlés, puis, si la température acquise est inférieure à une température cible :
a) on fait fonctionner le moteur thermique de manière qu'il développe un couple thermique supérieur au couple d'entraînement,
b) on fait fonctionner la machine électrique réversible en mode génératrice de manière qu'elle absorbe la différence entre le couple thermique et le couple d'entraînement,
c) on fait fonctionner le compresseur électrique de manière qu'il comprime l'air frais, et
d) on déleste la turbine à l'aide des moyens de délestage.

Ainsi, grâce à l'invention, lorsque l'on souhaite augmenter fortement et/ou rapidement la température de gaz brûlés (par exemple lors d'un démarrage à froid ou lors d'une phase de régénération), on utilise préférentiellement le compresseur électrique pour comprimer l'air frais.

La turbine étant alors délestée, elle ne détend pas ou peu les gaz brûlés, ce qui leur permet d'augmenter plus rapidement en température.

Un autre avantage est que l'utilisation du compresseur électrique permet de décharger la batterie d'accumulateurs lorsque cette dernière est complètement chargée. Par conséquent, la machine électrique peut fonctionner en mode génératrice, ce qui permet de piloter le moteur thermique de telle sorte qu'il développe un couple supérieur au couple nécessaire pour faire avancer le véhicule automobile. La montée en température des gaz brûlés peut donc ainsi se faire plus rapidement.

Si la température acquise est supérieure ou égale à la température cible, on fait fonctionner le moteur thermique de manière qu'il développe un couple thermique inférieur au couple d'entraînement, et on fait fonctionner la machine électrique réversible en mode moteur de manière qu'elle compense la différence entre le couple d'entraînement et le couple thermique.

D'autres caractéristiques avantageuses du procédé de pilotage conforme à l'invention sont les suivantes :
- lors d'un démarrage à froid du moteur thermique, la température cible considérée est égale à la température minimale d'une plage de température nominale de fonctionnement du moyen de traitement ;
- lors d'une régénération du moyen de traitement, la température cible considérée est égale à la température pour laquelle l'efficacité de la régénération est optimale ;
- on acquiert le niveau de charge de la batterie d'accumulateurs et on fait fonctionner la machine électrique en mode moteur seulement si ledit niveau de charge est supérieur à un seuil minimal de charge prédéterminé ;
- on acquiert le niveau de charge de la batterie d'accumulateurs ainsi qu'une consigne de compression de l'air frais, et si ledit niveau de charge est inférieur à un seuil minimal de charge prédéterminé, on fait simultanément fonctionner le compresseur électrique et le compresseur principal de manière qu'ils fournissent ensemble le travail nécessaire pour atteindre ladite consigne de compression ;
- on acquiert une consigne de compression de l'air frais, et si ladite consigne de compression dépasse les capacités du compresseur électrique, on fait simultanément fonctionner le compresseur électrique et le compresseur principal de manière qu'ils fournissent ensemble le travail nécessaire pour atteindre ladite consigne de compression.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un groupe motopropulseur conforme à l'invention ;
- la figure 2 est un graphique illustrant la relation entre l'efficacité de la régénération d'un piège à oxydes d'azote et sa température ; et
- la figure 3 est un organigramme illustrant les différentes étapes d'un procédé de pilotage du groupe motopropulseur selon l'invention.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

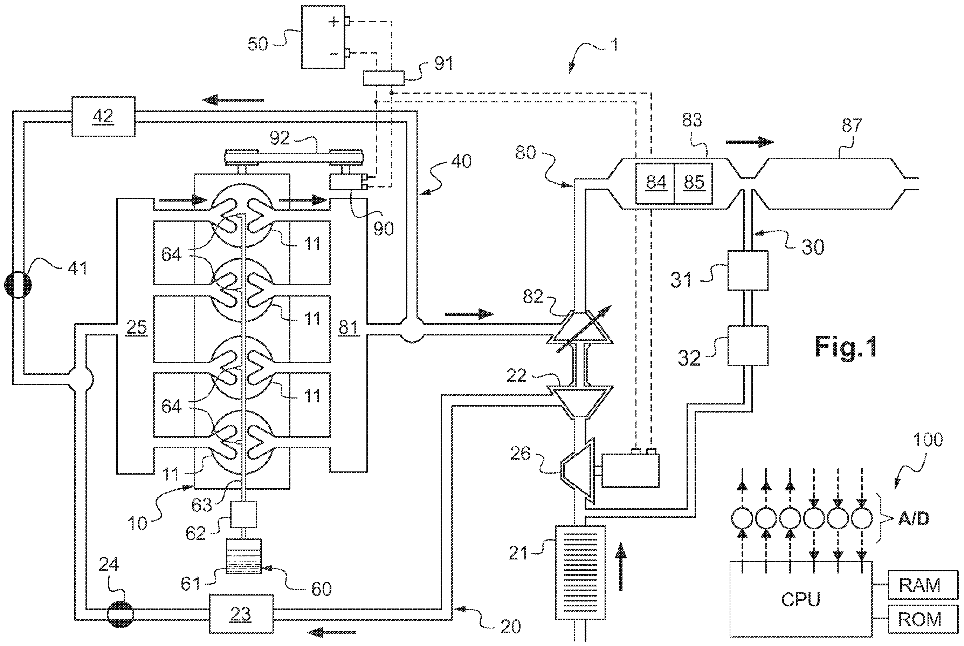

Sur la figure 1, on a représenté schématiquement un groupe motopropulseur 1 de véhicule automobile, qui comprend un moteur thermique (ou « moteur à combustion interne ») associé à une machine électrique 90 réversible, et un calculateur 100 adapté à piloter le moteur thermique et la machine électrique 90.

Le moteur thermique comprend un bloc-moteur 10 pourvu d'un vilebrequin reliés à quatre pistons (non représentés) logés dans quatre cylindres 11. Ce moteur est ici à allumage par compression (Diesel). Il pourrait également être à allumage commandé (Essence). Il pourrait comporter davantage de cylindres ou au contraire un nombre réduit de cylindres.

En amont des cylindres 11, le moteur thermique comporte une ligne d'admission 20 qui prélève l'air frais dans l'atmosphère et qui débouche dans un répartiteur d'air 25 agencé pour répartir l'air frais vers chacun des quatre cylindres 11 du bloc-moteur 10.

Cette ligne d'admission 20 comporte, dans le sens d'écoulement de l'air frais, un filtre à air 21 qui filtre l'air frais prélevé dans l'atmosphère, un compresseur principal 22 qui comprime l'air frais filtré par le filtre à air 21, un refroidisseur d'air principal 23 qui refroidit cet air frais comprimé, et une vanne d'admission 24 qui permet de réguler le débit d'air frais débouchant dans le répartiteur d'air 25.

En sortie des cylindres 11, le moteur thermique comporte une ligne d'échappement 80 qui s'étend depuis un collecteur d'échappement 81 dans lequel débouchent les gaz qui ont été préalablement brûlés dans les cylindres 11, jusqu'à un silencieux d'échappement 87 permettant de détendre les gaz brûlés avant qu'ils ne soient évacués dans l'atmosphère. Elle comporte par ailleurs, dans le sens d'écoulement des gaz brûlés, une turbine 82, et un moyen de traitement 83 des gaz brûlés.

La turbine 82 est entraînée en rotation par le flux de gaz brûlés sortant du collecteur d'échappement 81, et elle permet d'entraîner le compresseur principal 22 en rotation, grâce à des moyens de couplage mécanique tels qu'un simple arbre de transmission.

Il est ici en outre prévu des moyens de délestage de la turbine 82.

Ces moyens de délestage sont ici formés par un moteur pas-à-pas qui permet de régler l'inclinaison des aubes de la turbine 82. On comprend alors que suivant cet inclinaison, le flux de gaz brûlés pourra ou non entraîner les aubes de la turbine en rotation.

En variante, les moyens de délestage pourraient comporter une conduite de court-circuitage de la turbine (plus généralement connue sous le nom de « conduite waste-gate »), qui serait branchée en parallèle de la turbine et qui serait équipée d'une vanne de régulation du débit de gaz brûlés la traversant.

Le moyen de traitement 83 des gaz brûlés peut quant à lui se présenter sous différentes formes. On considérera ici, de manière non limitative, qu'il comporte un piège à oxydes d'azote 84 suivi d'un filtre à particules 85.

S'agissant d'un moteur diesel, il pourrait aussi comporter, par exemple, un catalyseur d'oxydation et un catalyseur de réduction sélective des oxydes d'azote (dit aussi « SCR », conformément en l'acronyme anglo-saxon : Selective Oxidation Catalyst).

Si le moteur était à allumage commandé (c'est-à-dire « à essence »), il comporterait plutôt un catalyseur trois voies, ou encore un catalyseur quatre voies qui intègrerait une fonction de filtre à particules dans le cas de certains moteurs à injection directe.

Ici, dans un mode de fonctionnement normal, le piège à oxydes d'azote 84 permet de retenir les oxydes d'azote et le filtre à particules 85 permet de retenir les suies et particules solides en suspension dans les gaz brûlés.

Dans un mode de régénération de ces deux éléments, on fait en sorte de mêler aux gaz brûlés des hydrocarbures imbrulés, de manière que ces derniers transforment les oxydes d'azote en eau, en dioxyde de carbone et en dioxyde d'azote. Cette réaction chimique exothermique permet alors d'accroître la température des gaz brûlés, et partant, de brûler les suies et particules retenues dans le filtre à particules 85.

Comme cela apparaît sur la figure 1, le moteur thermique peut éventuellement aussi comporter une ligne de recirculation des gaz brûlés à haute pression, qui permet de prélever une partie des gaz brûlés circulant dans la ligne d'échappement 80 pour la réinjecter dans les cylindres 11 afin de réduire les émissions polluantes du moteur, et en particulier les émissions d'oxydes d'azote.

Cette ligne de recirculation est communément appelée ligne EGR-HP 40, conformément à l'acronyme anglo-saxon de « Exhaust Gaz Recirculation - High Pressure ». Elle prend naissance dans la ligne d'échappement 80, entre le collecteur d'échappement 81 et la turbine 82, et elle débouche dans la ligne d'admission 20, entre la vanne d'admission 24 et le répartiteur d'air 25.

Cette ligne EGR-HP 40 comporte un refroidisseur secondaire 42 suivi d'une vanne 41 de régulation du débit.

Le moteur thermique peut éventuellement aussi comporter une ligne de recirculation des gaz brûlés à basse pression.

Cette ligne de recirculation est communément appelée ligne EGR-LP 30, conformément à l'acronyme anglo-saxon de « Exhaust Gaz Recirculation - Low Pressure ». Elle prend naissance dans la ligne d'échappement 80, à la sortie du filtre à particules 85, et débouche dans la ligne d'admission 20, entre le filtre à air 21 et le compresseur principal 22.

Cette ligne EGR-LP 30 comporte un échangeur thermique 31 suivi d'une vanne 32 de régulation du débit.

Le moteur thermique comporte par ailleurs une ligne d'injection 60 de carburant dans les cylindres 11.

Cette ligne d'injection 60 comporte une pompe d'injection 62 agencée pour prélever le carburant dans un réservoir 61 afin de l'amener sous pression dans un rail de distribution 63. Cette ligne d'injection 60 comporte en outre quatre injecteurs 64 dont les entrées communiquent avec le rail de distribution 63 et dont les sorties débouchent respectivement dans les quatre cylindres 11.

La quantité d'air et de carburant injectée dans les cylindres permet alors au moteur thermique de développer un couple, qui sera appelé dans la suite de la description « couple thermique Ct ».

La machine électrique 90 réversible est quant à elle couplée au vilebrequin du moteur thermique.

Telle que représentée sur la figure 1, la machine électrique 90 est formée par un alterno-démarreur.

Elle est ici directement couplée au vilebrequin du bloc-moteur 10 par une courroie 92.

En variante, elle pourrait y être couplée indirectement. Elle pourrait ainsi être couplée à l'un des arbres de la boîte de vitesses ou encore à la courroie d'accessoire du groupe motopropulseur 1.

Quoi qu'il en soit, cette machine électrique 90 est apte à fonctionner en mode « moteur » ou en mode « génératrice », sous la supervision d'un boîtier de commande 91 piloté par le calculateur 100.

En mode « génératrice », la machine électrique 90 est un alternateur qui fournit un courant électrique destiné à être stocké dans une batterie d'accumulateurs 50. Dans ce mode, elle prélève sur le couple thermique Ct un couple électrique Ce résistant.

En mode « moteur », elle est au contraire alimentée par le courant électrique stocké dans la batterie d'accumulateurs 50 et elle fournit un couple électrique Ce moteur qui s'ajoute au couple thermique Ct pour être transmis aux roues du véhicule.

Selon une caractéristique de l'invention, la ligne d'amission 20 du moteur thermique comporte en outre un compresseur électrique 26 situé entre le filtre à air 21 et le refroidisseur d'air principal 23.

Ce compresseur électrique 26 est ici situé en amont du compresseur principal 22 et en aval de la jonction de la ligne d'amission 20 avec la ligne EGR-BP 30.

En variante non représentée, le compresseur électrique 26 pourrait être situé en aval du compresseur principal 22.

Quoi qu'il en soit, il est ici entraîné en rotation par un moteur électrique alimenté en courant par la même batterie d'accumulateurs 50 que celle à laquelle est connectée la machine électrique 90.

Pour piloter les différents organes du groupe motopropulseur 1 et notamment l'inclinaison des aubes de la turbine 82, les injecteur 64, le boîtier de commande 91 et le moteur électrique du compresseur électrique 26, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur thermique.

Dans sa mémoire vive, le calculateur 100 mémorise ainsi en continu :
- le régime N et la charge instantanés du moteur thermique,
- la température des gaz brûlés dans la ligne d'échappement 80, ici grâce à un capteur placé entre le piège à oxydes d'azote 84 et le filtre à particules 85,
- le taux de dioxygène présent dans les gaz brûlés, ici grâce à une sonde placée en aval du filtre à particules 85, et
- la différence de pression entre la sortie et l'entrée du filtre à particules 85, ici grâce à deux capteurs placés directement en amont et en aval de celui-ci.

La charge correspond au couple thermique Cₜ (exprimé en Nm) que le moteur thermique fournit pour entraîner les roues motrices du véhicule.

Le régime N correspond à la vitesse de rotation du vilebrequin, exprimée en tours par minute.

Grâce à une cartographie prédéterminée sur banc d'essais et mémorisée dans sa mémoire morte, le calculateur 100 est adapté à générer, pour chaque condition de fonctionnement du moteur, des signaux de sortie.

En particulier, cette cartographie permet, en mesurant le régime N et la température θ des gaz brûlés traversant le piège à oxydes d'azote 84, de déterminer le couple thermique Cₜ fourni par le moteur thermique.

Elle permet également, en mesurant le régime N et en considérant une température cible θ₀, de déterminer le couple thermique Cₜ que doit fournir le moteur thermique pour que ses gaz brûlés atteignent, au niveau du piège à oxydes d'azote 84, la température cible θ₀.

La cartographie permet également de déterminer une consigne de pression CP, c'est-à-dire la valeur que la pression de l'air frais doit atteindre avant son entrée dans les cylindres. Cette consigne de pression CP peut être atteinte à l'aide du compresseur principal 22 seul, ou du compresseur électrique 26 seul, ou des deux compresseurs utilisés en combinaison.

Enfin, grâce à ses interfaces de sortie, le calculateur 100 est adapté à transmettre des signaux de sortie aux différents organes du moteur. Il est ainsi notamment adapté à contrôler l'orientation des aubes de la turbine 82 et la vitesse de rotation du compresseur électrique 26 de manière que la pression de l'air frais soit égale à ladite consigne de pression CP .

Classiquement, lorsque le conducteur du véhicule automobile met le contact, le calculateur 100 s'initialise puis commande la machine électrique 90 et les injecteurs de carburant 64 pour que ceux-ci démarrent le moteur.

Lorsque le moteur est démarré, l'air frais prélevé dans l'atmosphère par la ligne d'admission 20 est filtré par le filtre à air 21, éventuellement mélangé avec des gaz brûlés issus de la ligne EGR-BP 30, éventuellement comprimé par le compresseur principal 22, refroidi par le refroidisseur d'air principal 23, éventuellement mélangé avec des gaz brûlés issus de la ligne EGR-HP 40, puis brûlé dans les cylindres 11.

En mode de fonctionnement normal, le compresseur électrique 26 n'est pas utilisé pour comprimer l'air frais.

A leur sortie des cylindres 11, les gaz brûlés sont détendus dans la turbine 82, traités et filtrés dans le piège à oxydes d'azote 84 et le filtre à particules 85, puis détendus à nouveau dans le silencieux d'échappement 87 avant d'être rejetés dans l'atmosphère.

Le moteur thermique permet ainsi de générer un couple thermique Ct pour entraîner les roues motrices du véhicule automobile.

Comme cela a été exposé supra, la machine électrique 90 permet quant à elle soit de générer un couple électrique Ce pour entraîner les roues motrices du véhicule automobile, soit de retirer de l'entraînement des roues motrices un couple électrique Ce.

L'enfoncement de la pédale d'accélérateur (non représentée) du véhicule par le conducteur est traduite par le calculateur 100 en une consigne de couple C à transmettre aux roues du véhicule. La consigne de couple C peut alors être obtenue soit sous la forme d'un couple thermique, soit sous la forme d'un couple électrique, soit sous la forme d'une combinaison des deux. Dans tous les cas, la valeur de la consigne de couple C doit être égale à la somme algébrique des valeurs du couple thermique Ct et du couple électrique Ce, ce dernier prenant une valeur positive en mode « moteur » et une valeur négative en mode « génératrice » de la machine électrique 90.

De manière connue en soi, le moteur thermique (ici un moteur diesel) fonctionne en mélange pauvre pour la production du couple thermique Ct. Ce couple thermique Ct résulte de la combustion dans le moteur 2 d'un mélange d'air frais (auquel peuvent s'ajouter des gaz brûlés) et de carburant dans des quantités bien définies par le calculateur 100 et dans des proportions inférieures aux proportions stœchiométriques. De ce fait, le moteur thermique émet des oxydes d'azote dans ses gaz brûlés.

Le piège à oxydes d'azote 84 permet de limiter ces rejets. Comme indiqué supra, il fonctionne de manière séquentielle.

Pendant un mode de fonctionnement normal du moteur, c'est-à-dire en mélange pauvre, il stocke une partie plus ou moins importante des oxydes d'azote émis par le moteur thermique sans les traiter.

Pendant un mode de régénération (par exemple lorsque la capacité maximale de stockage du piège à oxydes d'azote 84 ou du filtre à particules 85 est atteinte), le calculateur 100 déclenche une séquence de régénération (ou « purge »), qui se traduit par une injection de carburant dans le piège qui permet à ce dernier de retrouver sa capacité de stockage. L'injection de carburant dans le piège à oxydes d'azote 84 est généralement obtenue en injectant dans les cylindres 11 un mélange riche. Le carburant qui ne concourt pas à la production du couple thermique Ct ressort ainsi des cylindres 11 et débouche dans le piège à oxydes d'azote 84 pour y réduire les oxydes d'azote.

Comme indiqué supra, cette réaction chimique très exothermique permet de faire monter la température des gaz brûlés qui traversent le filtre à particules 85, de manière que les particules et suies retenues dans ce dernier soient brûlées, ce qui permet également au filtre à particules 85 de recouvrer sa capacité de stockage.

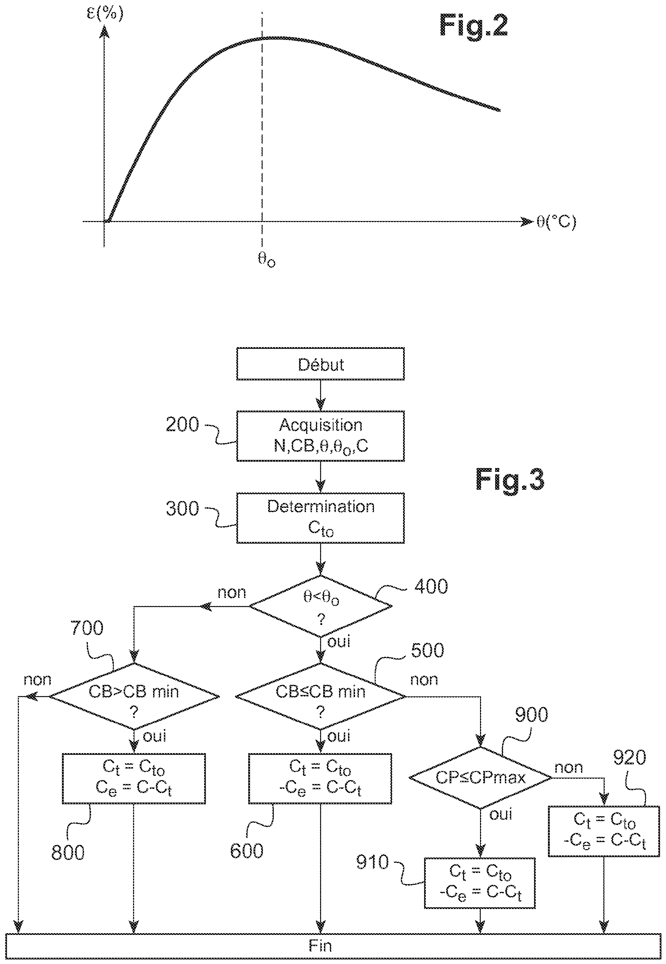

La régénération du piège à oxydes d'azote 84 s'effectue avec une certaine efficacité ε. Comme le montre la figure 2, cette efficacité ε est une fonction de la température θ des gaz brûlés traversant le piège à oxydes d'azote 84. L'efficacité est maximale pour une valeur particulière θ₀ de la température, appelée température cible θ₀.

Par conséquent, il est avantageux de réaliser une séquence de régénération à une température égale à, ou sinon proche de, la température cible θ₀. En effet, c'est à cette température que la quantité de carburant nécessaire à la régénération du piège à oxydes d'azote 84 est minimale, ce qui permet de limiter la consommation en carburant du véhicule.

Cette température cible θ₀ est ici considérée comme étant une constante mémorisée dans la mémoire morte du calculateur 100. En variante, il pourrait s'agir d'une variable, dépendant par exemple du régime N du moteur thermique, auquel cas ses valeurs seraient mémorisées dans la cartographie.

La séquence de régénération du piège à oxydes d'azote 84 et du filtre à particules 85 est opérée de la manière suivante.

Le calculateur 100 surveille en continu le niveau de remplissage du filtre à particules 85 (grâce à la différence de pressions mesurées en amont et en aval du filtre) et le niveau de remplissage du piège à oxydes d'azote (grâce à la sonde de dioxygène placée en aval du piège).

Lorsque l'un ou l'autre de ces niveaux de remplissage dépasse un seuil prédéterminé mémorisé dans sa mémoire morte, le calculateur 100 commande la régénération du piège à oxydes d'azote 84 et du filtre à particules 85.

La figure 3 illustre les différentes étapes du procédé de régénération selon l'invention.

Au cours d'une première étape 200, le calculateur 100 mesure les valeurs du régime N, du niveau de charge CB de la batterie d'accumulateurs 50 et de la température θ des gaz brûlés dans le piège à oxydes d'azote 84. Il acquiert en outre la température cible θ_{ο} et la consigne de couple C à transmettre aux roues du véhicule, compte tenu du taux d'enfoncement de la pédale d'accélérateur.

Au cours d'une seconde étape 300, grâce à la cartographie mémorisée dans sa mémoire morte le calculateur 100 détermine le couple thermique optimal Cto qui permettrait aux gaz brûlés d'atteindre cette température cible θ_{ο}.

Le procédé comprend ensuite une première étape de test 400 au cours de laquelle la température θ est comparée à la température cible θ_{ο}. Si la température θ est inférieure à la température cible θ₀, le procédé met en œuvre une deuxième étape de test 500. Dans le cas contraire, il met en œuvre une troisième étape de test 700.

On comprend que dans le cas où la température θ mesurée est inférieure à la température cible θ₀, il va falloir augmenter le couple thermique Ct pour atteindre la température cible. L'excès de couple thermique par rapport au besoin du véhicule sera alors absorbé par la machine électrique 90 qui chargera la batterie d'accumulateurs 50.

A contrario, dans le cas où la température θ mesurée est supérieure à la température cible θ_{ο}, il va falloir diminuer le couple thermique Ct pour atteindre la température cible. Le complément de couple permettant de satisfaire les besoins du véhicule sera alors apporté par la machine électrique 90 qui utilisera le courant stocké dans la batterie d'accumulateurs 50.

Considérons tout d'abord le cas où la température θ mesurée est inférieure à la température cible θ_{ο}.

Lors de la deuxième étape de test 500, le calculateur 100 compare le niveau de charge CB de la batterie d'accumulateurs avec un seuil minimal de charge CBmin (en deçà duquel utiliser le courant stocké dans la batterie d'accumulateurs 50 risquerait de nuire à celle-ci).

Si le niveau de charge CB est inférieur ou égal au seuil minimal de charge CBmin, le procédé se poursuit par une étape 600. Dans le cas contraire, il se poursuit en une quatrième étape de test 900.

Au cours de l'étape 600, le calculateur 100 fait fonctionner le moteur thermique sur le couple thermique optimal Cto, lequel est supérieur à la consigne de couple C à transmettre aux roues, et le boîtier de commande 91 piloté par le calculateur 100 impose à la machine électrique 90 de fonctionner en mode « génératrice », en prélevant un couple électrique Ce, négatif, égal à la différence entre la consigne de couple C et le couple thermique optimal Cto. Par conséquent, le surplus de carburant apporté pour la régénération n'est pas perdu et est transformé en énergie électrique stockée dans la batterie d'accumulateurs 50.

Lors de cette étape 600, le compresseur électrique 26 demeure à l'arrêt. Seul le compresseur principal 22 est utilisé pour comprimer l'air frais.

Lors de la quatrième étape de test 900, le calculateur 100 compare la consigne de pression CP de l'air frais avec un seuil maximal de pression CPmax atteignable par le compresseur principal 22 seul.

Si la consigne de pression CP est inférieure ou égal au seuil maximal de pression CPmax, le procédé se poursuit par une étape 910. Dans le cas contraire, il se poursuit en une étape 920.

Lors de ces étapes 910 et 920, le calculateur 100 fait fonctionner le moteur thermique sur le couple thermique optimal Cto, lequel est supérieur à la consigne de couple C à transmettre aux roues, et le boîtier de commande 91 piloté par le calculateur 100 impose à la machine électrique 90 de fonctionner en mode « génératrice », en prélevant un couple électrique Ce (comme au cours de l'étape 600).

La différence est qu'à l'étape 910, la turbine 82 est entièrement délestée si bien que seul le compresseur électrique 26 est utilisé pour comprimer l'air frais à hauteur de la consigne de pression CP.

A l'étape 920, le compresseur électrique 26 est utilisé au maximum de ses capacités et la turbine 82 est partiellement délestée, de manière que le compresseur principal 22 participe à la compression de l'air frais. Dans cette étape, c'est donc la combinaison des deux compresseurs qui permet de comprimer l'air frais à hauteur de la consigne de pression CP.

On comprend que lors de ces étapes 910, 920, le surplus de couple thermique Ct nécessite d'injecter dans les cylindres 11 davantage d'air frais. Selon l'invention, pour cela, on utilise le moins possible le compresseur principal 22, puisque celui-ci est couplé à la turbine 82 et que cette dernière provoquerait une détente des gaz brûlés et donc une chute de température de ces gaz, ce qui irait à l'encontre du but recherché.

On comprend également que lors de ces étapes 910, 920, le calculateur 100 fait fonctionner le moteur thermique sur le couple optimal Cto et le boîtier de commande 91 impose à la machine électrique 90 de fonctionner en mode « génératrice », en prélevant un couple électrique Ce.

Cela n'est possible lorsque la batterie d'accumulateurs 50 est complètement chargée que parce que le compresseur électrique 26 est simultanément alimenté par la batterie d'accumulateurs 50. Il n'y a donc pas de risque de surcharge de la batterie.

On pourrait d'ailleurs prévoir que le courant électrique ne passe pas par la batterie d'accumulateurs 50, mais transite directement depuis la machine électrique 90 vers le compresseur électrique 26, via le boîtier de commande 91 qui pourra ajuster l'intensité du courant fourni au compresseur électrique 26.

Considérons maintenant la troisième étape de test 700. Lors de cette étape de test 700, le niveau de charge CB de la batterie d'accumulateurs 50 est comparée au seuil minimal de charge CBmin.

Si le niveau de charge CB est supérieure au seuil minimal de charge CBmin, le procédé se poursuit par une étape 800 au cours de laquelle le calculateur 100 fait aussi fonctionner le moteur thermique sur le couple optimal Co. La différence par rapport à l'étape 600 est ici que celui-ci est inférieur à la consigne de couple C. Dès lors, le boîtier de commande 90 impose à la machine électrique 90 de fonctionner en mode « moteur », en fournissant un couple électrique Ce, positif, égal à la différence entre la consigne de couple C et le couple thermique Ct.

Pour ne pas décharger trop rapidement la batterie d'accumulateurs 50, on peut ici prévoir de désactiver le compresseur électrique 26. Seul le compresseur principal 22 permettra donc de comprimer l'air frais. En variante, si la charge CB de la batterie est supérieur à un seuil admissible prédéterminé, on pourrait prévoir d'utiliser le compresseur électrique 26 (seul ou en combinaison avec le compresseur principal 22) de manière à éviter que la turbine 82 ne détende trop les gaz brûlés.

Si la charge CB est en revanche inférieure ou égale au seuil minimal de charge CBmin, aucune action n'est entreprise jusqu'à la fin de la séquence de régénération.

La présente invention s'applique ainsi parfaitement à d'autres modes de fonctionnement particulier du groupe motopropulseur.

A titre d'exemple, lors d'un démarrage à froid du véhicule automobile, on sait que le piège à oxydes d'azote 84 ne fonctionne pas de manière optimale. Il est en effet prévu pour fonctionner dans une plage de températures donnée. Il faut alors attendre qu'il atteigne la température minimale de cette plage de températures pour qu'il stocke de manière efficace les oxydes d'azote.

Pour qu'il atteigne cette température minimale, on pourra mettre en œuvre les étapes 400 et suivantes précitées, en considérant que la température cible θ₀ est égale à cette température minimale.

On fera ainsi fonctionner le moteur thermique de manière qu'il développe un couple thermique Ct supérieur au couple C nécessaire pour l'entraînement des roues motrices du véhicule, afin que les gaz brûlés montent plus rapidement en température et réchauffent plus vite le piège à oxydes d'azote 84. Ici encore, on utilisera préférentiellement le compresseur électrique 26 pour comprimer l'air frais, de manière à éviter que la turbine 82 ne détende les gaz brûlés et ne les refroidisse et de manière à s'assurer que le niveau de charge CB de la batterie d'accumulateurs 50 ne dépasse par le seuil maximal de charge CBmax.

## Revendications

1. Procédé de pilotage d'un groupe motopropulseur (1) pour véhicule automobile, le groupe motopropulseur (1) comportant :
- un moteur thermique qui comprend :
• un bloc moteur (10) qui délimite des cylindres (11) et qui est équipé d'un vilebrequin,
• une ligne d'admission (20) d'air frais dans les cylindres (11),
• une ligne d'échappement (80) de gaz brûlés hors des cylindres (11), qui comprend un moyen de traitement (83) des gaz brûlés,
• un turbocompresseur qui comprend une turbine (82) montée dans la ligne d'échappement (80), un compresseur principal (22) monté dans la ligne d'admission (20), et des moyens de délestage de ladite turbine (82),
• un compresseur électrique (26) qui est monté dans la ligne d'admission (20) et qui est actionné par un moteur électrique connecté à ladite batterie d'accumulateurs (50),
- une machine électrique (90) qui est couplée au vilebrequin du moteur thermique, qui est connectée à une batterie d'accumulateurs (50) et qui est réversible de manière à pouvoir fonctionner en mode moteur ou en mode génératrice,
le procédé de pilotage étant **caractérisé en ce qu'**on acquiert un couple d'entraînement (C) nécessaire pour entraîner le véhicule automobile ainsi que la température (θ) des gaz brûlés, puis,
• si la température (θ) acquise est inférieure à une température cible (θ₀) :
a) on fait fonctionner le moteur thermique de manière qu'il développe un couple thermique (Ct) supérieur au couple d'entraînement (C),
b) on fait fonctionner la machine électrique (90) en mode génératrice de manière qu'elle absorbe la différence entre le couple thermique (Ct) et le couple d'entraînement (C),
c) on fait fonctionner le compresseur électrique (26) de manière qu'il comprime l'air frais, et
d) on déleste la turbine (82) à l'aide des moyens de délestage, et
• si la température (θ) acquise est supérieure ou égale à la température cible (θ₀) :
- on fait fonctionner le moteur thermique de manière qu'il développe un couple thermique (Ct) inférieur au couple d'entraînement (C), et
- on fait fonctionner la machine électrique (90) en mode moteur de manière qu'elle compense la différence entre le couple d'entraînement (C) et le couple thermique (Ct).

2. Procédé de pilotage selon la revendication 1, dans lequel, lors d'un démarrage à froid du moteur thermique, la température cible (θ₀) considérée est égale à la température minimale d'une plage de température nominale de fonctionnement du moyen de traitement (83).

3. Procédé de pilotage selon l'une des revendications 1 et 2, dans lequel, lors d'une régénération du moyen de traitement (83), la température cible (θ₀) considérée est égale à la température pour laquelle l'efficacité de la régénération est optimale.

4. Procédé de pilotage selon l'une des revendications précédentes, dans lequel on acquiert le niveau de charge (CB) de la batterie d'accumulateurs (50) et on fait fonctionner la machine électrique (90) en mode moteur seulement si ledit niveau de charge (CB) est supérieur à un seuil minimal de charge (CBₘᵢₙ) prédéterminé.

5. Procédé de pilotage selon l'une des revendications 1 à 4, dans lequel on acquiert le niveau de charge (CB) de la batterie d'accumulateurs (50) ainsi qu'une consigne de compression (CC) de l'air frais, et si ledit niveau de charge (CB) est inférieur à un seuil minimal de charge (CBₘᵢₙ) prédéterminé, on fait simultanément fonctionner le compresseur électrique (26) et le compresseur principal (22) de manière qu'ils fournissent ensemble le travail nécessaire pour atteindre ladite consigne de compression (CC).

6. Procédé de pilotage selon l'une des revendications 1 à 5, dans lequel on acquiert une consigne de pression (CP) de l'air frais, et si ladite consigne de compression (CC) dépasse les capacités (CPmax) du compresseur électrique (26), on fait simultanément fonctionner le compresseur électrique (26) et le compresseur principal (22) de manière qu'ils fournissent ensemble le travail nécessaire pour atteindre ladite consigne de pression (CP).

## Patentansprüche

1. Verfahren zum Steuern einer Antriebseinheit (1) für ein Kraftfahrzeug, wobei die Antriebseinheit (1) aufweist:
- einen Verbrennungsmotor, der enthält:
• einen Motorblock (10), der Zylinder (11) begrenzt und mit einer Kurbelwelle ausgestattet ist,
• eine Ansaugleitung (20) von Frischluft in die Zylinder (11),
• eine Auspuffleitung (80) von Abgasen aus den Zylindern (11), die eine Verarbeitungseinrichtung (83) der Abgase enthält,
• einen Turbolader, der eine in die Auspuffleitung (80) montierte Turbine (82), einen in die Ansaugleitung (20) montierten Hauptverdichter (22) und Einrichtungen zur Entlastung der Turbine (82) enthält,
• einen elektrischen Verdichter (26), der in die Ansaugleitung (20) montiert ist und von einem mit der Akkumulatorenbatterie (50) verbundenen Elektromotor betätigt wird,
- eine elektrische Maschine (90), die mit der Kurbelwelle des Verbrennungsmotors gekoppelt ist, die mit einer Akkumulatorenbatterie (50) verbunden und umkehrbar ist, um im Motormodus oder im Generatormodus arbeiten zu können,
wobei das Steuerverfahren **dadurch gekennzeichnet ist, dass** ein Antriebsmoment (C), das notwendig ist, um das Kraftfahrzeug anzutreiben, sowie die Temperatur (θ) der Abgase erfasst werden, dann,
• wenn die erfasste Temperatur (θ) unter einer Zieltemperatur (θ₀) liegt:
a) der Verbrennungsmotor so betrieben wird, dass er ein thermisches Drehmoment (Ct) höher als das Antriebsmoment (C) entwickelt,
b) die elektrische Maschine (90) im Generatormodus betrieben wird, damit sie die Differenz zwischen dem thermischen Drehmoment (Ct) und dem Antriebsmoment (C) absorbiert,
c) der elektrische Verdichter (26) so betrieben wird dass er die Frischluft verdichtet, und
d) die Turbine (82) mit Hilfe der Entlastungseinrichtungen entlastet wird, und
• wenn die erfasste Temperatur (θ) höher als die oder gleich der Zieltemperatur (θ₀) ist:
- der Verbrennungsmotor so betrieben wird, dass er ein thermisches Drehmoment (Ct) niedriger als das Antriebsmoment (C) entwickelt, und
- die elektrische Maschine (90) im Motormodus betrieben wird, damit sie die Differenz zwischen dem Antriebsmoment (C) und dem thermischen Drehmoment (Ct) kompensiert.

2. Steuerverfahren nach Anspruch 1, wobei bei einem Kaltstart des Verbrennungsmotors die betrachtete Zieltemperatur (θ₀) gleich der minimalen Temperatur eines Betriebsnenntemperaturbereichs der Verarbeitungseinrichtung (83) ist.

3. Steuerverfahren nach einem der Ansprüche 1 und 2, wobei bei einer Regenerierung der Verarbeitungseinrichtung (83) die betrachtete Zieltemperatur (θ₀) gleich der Temperatur ist, bei der die Wirksamkeit der Regenerierung optimal ist.

4. Steuerverfahren nach einem der vorhergehenden Ansprüche, wobei der Ladepegel (CB) der Akkumulatorenbatterie (50) erfasst und die elektrische Maschine (90) nur dann im Motormodus betrieben wird, wenn der Ladepegel (CB) höher ist als eine vorbestimmte minimale Ladeschwelle (CBₘᵢₙ).

5. Steuerverfahren nach einem der Ansprüche 1 bis 4, wobei der Ladepegel (CB) der Akkumulatorenbatterie (50) sowie ein Verdichtungssollwert (CC) der Frischluft erfasst werden, und wenn der Ladepegel (CB) niedriger ist als eine minimale Ladeschwelle (CBₘᵢₙ), gleichzeitig der elektrische Verdichter (26) und der Hauptverdichter (22) betrieben werden, damit sie zusammen die notwendige Arbeit liefern, um den Verdichtungssollwert (CC) zu erreichen.

6. Steuerverfahren nach einem der Ansprüche 1 bis 5, wobei ein Verdichtungssollwert (CP) der Frischluft erfasst wird, und wenn der Verdichtungssollwert (CC) die Kapazitäten (CPmax) des elektrischen Verdichters (26) übersteigt, gleichzeitig der elektrische Verdichter (26) und der Hauptverdichter (22) betrieben werden, damit sie zusammen die notwendige Arbeit liefern, um den Verdichtungssollwert (CP) zu erreichen.

## Claims

1. Method for controlling a powertrain (1) for a motor vehicle, the powertrain (1) comprising:
- a heat engine which comprises:
- an engine block (10) which delimits cylinders (11) and is provided with a crankshaft,
- an intake line (20) for the admission of fresh air into the cylinders (11),
- an exhaust line (80) for discharging burnt gases from the cylinders (11), comprising a treatment means (83) for treating the burnt gases,
- a turbocharger which comprises a turbine (82) mounted in the exhaust line (80), a main compressor (22) mounted in the intake line (20), and means for unloading said turbine (82),
- an electric compressor (26) which is mounted in the intake line (20) and is driven by an electric motor connected to said accumulator battery (50),
- an electrical machine (90) which is coupled to the crankshaft of the heat engine and is connected to an accumulator battery (50), and which is reversible such that it can operate in either motor or generator mode, the control method being **characterized in that** a propulsive torque (C) required to propel the motor vehicle is acquired, together with the temperature (θ) of the burnt gases, and then,
• if the acquired temperature (θ) is below a target temperature (θ₀) :
a) the heat engine is made to operate so as to develop a thermal torque (Ct) which is greater than the propulsive torque (C),
b) the electrical machine (90) is made to operate in generator mode so that it absorbs the difference between the thermal torque (Ct) and the propulsive torque (C),
c) the electric compressor (26) is made to operate in such a way that it compresses the fresh air, and
d) the turbine (82) is unloaded, using the unloading means, and
• if the acquired temperature (θ) is greater than or equal to the target temperature (θ₀):
- the heat engine is made to operate so as to develop a thermal torque (Ct) which is less than the propulsive torque (C), and
- the electrical machine (90) is made to operate in motor mode so that it compensates for the difference between the propulsive torque (C) and the thermal torque (Ct) .

2. Control method according to Claim 1, wherein, when the heat engine is started from cold, the target temperature (θ₀) concerned is equal to the minimum temperature of a nominal operating temperature range of the treatment means (83).

3. Control method according to either of Claims 1 and 2, wherein, when the treatment means (83) is regenerated, the target temperature (θ₀) concerned is equal to the temperature for which the efficiency of the regeneration is optimal.

4. Control method according to one of the preceding claims, wherein the charge level (CB) of the accumulator battery (50) is acquired, and the electrical machine (90) is made to operate in motor mode only if said charge level (CB) is above a predetermined minimum charge threshold (CBₘᵢₙ) .

5. Control method according to one of Claims 1 to 4, wherein the charge level (CB) of the accumulator battery (50) is acquired, together with a fresh air compression setpoint (CC), and, if said charge level (CB) is below a predetermined minimum charge threshold (CBₘᵢₙ), the electric compressor (26) and the main compressor (22) are made to operate simultaneously so that they jointly supply the work necessary for reaching said compression setpoint (CC).

6. Control method according to one of Claims 1 to 5, wherein a fresh air pressure setpoint (CP) is acquired, and, if said compression setpoint (CC) exceeds the capabilities (CPₘₐₓ) of the electric compressor (26), the electric compressor (26) and the main compressor (22) are made to operate simultaneously so that they jointly supply the work necessary for reaching said pressure setpoint (CP).
